# EUROPEAN PATENT APPLICATION

(11) **EP 4 796 306 A2**
(43) Date of publication of application: **26.08.2026**
(21) Application number: 26192051.6
(22) Date of filing: 20.03.2025
(51) Int. Cl.: B29D 23/00

(54) **CO-CURED MULTI-MATERIAL COMPOSITE TUBES AND COMPOSITE TUBE ASSEMBLIES INCORPORATING SUCH COMPOSITE TUBES**

(30) Priority: 29.05.2024 US 202463653174 P; 17.02.2025 US 202519055312
(62) Document number(s) of the earlier application(s) in accordance with Art. 76 EPC: 25165154.3 / 4 656 361
(71) Applicant: Avtechtyee, Inc., Everett, WA 98203 (US)
(72) Inventor: GREENSTREET, Matthew Charles Sheldon, Bothell, WA 98021 (US)
(74) Representative: Calysta NV

(57) **Abstract**

A composite tube includes a first end opposite a second end, a first axial section including a non-conductive material, and a second axial section including a conductive material. A method for forming a composite tube includes laying a plurality of composite material layers over a mandrel forming a composite tube, and each of the plurality of layers includes a non-conductive section and a conductive section.

## Description

### CROSS-REFERENCE TO RELATED APPLICATION

This application is based upon and claims priority to U.S. Provisional Application No. 63/653,174, filed on May 29, 2024, the contents of which are fully incorporated herein by reference.

### BACKGROUND

In vehicles such as aircraft, it is beneficial to use control rods (e.g. linkages) in the form of composite tube assemblies which are often referred to as composite rods. Composite tube assemblies (i.e., composite rods) incorporate composite tubes typically made of carbon fibers. Composite tube assemblies are lighter and stronger than comparable metal tube assemblies. Composite tube assemblies are also more resistant to corrosion, stronger and more inert relative to metallic tubes. Composite tube assemblies may be used in multiple applications, as for example as control rods. or in an overhead luggage bin (or stow bin) assemblies in an aircraft to provide structural support both when the bin is in an open configuration and when it is closed. Composite tube assemblies may also be used as structural inserts in vehicle frames.

Composite tube assemblies incorporate a fitting or insert 13 (individually and collectively referred to herein for convenience as "fitting"), such as a Hylock metallic fitting, at each end of the composite tube. A clevis bolt, end rod or other type of connecting insert is connected to the fitting. Each composite tube end is mated over an outer surface of its corresponding fitting. A typical fitting, as well as a composite tube having an end mated over such fitting, are disclosed in U.S. Patent No. 8,205,315, the contents of which are incorporated herein by reference. To connect the fitting to the composite tube, an end of the composite tube is heated and a fitting is inserted into the heated end of the composite tube and the composite tube end is compressed over the fitting. The carbon fibers which make up the structural material of the composite tubes are electrically conductive. As such, the composite tube assemblies are not electrically resistive and thus, cannot be used in aircraft locations where control of conductive paths through the structure is desired. Control of conductive paths is desired to break up the electrical paths during lightning strike events. The industry standard to control the conductive paths is to create a part out of a resistive engineering material, such as Ultem plastic, that attaches to the end of a composite tube and breaks the connection between the composite tube and metallic end fitting. A more robust solution to this problem is desired.

### SUMMARY

In an example embodiment, a composite tube includes a first end opposite a second end, a first axial section including a non-conductive material through its thickness, and a second axial section including a conductive material, wherein the first axial section spans an axial portion of the tube not extending to the axial middle of the tube. In another example embodiment, the first axial section spans less than 40% of the axial length of the tube. In another example embodiment, the first axial section spans less than 30% of the axial length of the tube. In a further example embodiment, the tube is formed from a plurality of layers laid one over the other, wherein each layer includes a non-conductive section and a conductive section. In yet a further example embodiment, the non-conductive section of one the plurality of layers extends over a portion of the non-conductive section and a portion of the conductive section of an adjacent layer of the plurality of layers. In one example embodiment, the plurality of layers include a plurality of two-section layers each including a non-conductive section and a conductive section and a plurality of three-section layers each including two conductive sections and a non-conductive section between the two conductive sections, such that the plurality of layers forming the tube alternate between a layer of the plurality of two-section layers and a layer of the plurality of three-section layers. In another example embodiment, the composite tube also includes a plurality of non-conductive layers, and each of the plurality of non-conductive layers is separated from another of the plurality of non-conductive layers by at least one layer including a conductive section. In yet another example embodiment, each layer conductive section is a conductive sublayer and each layer non-conductive section is a non-conductive sublayer, and the conductive sublayer is laid adjacent the non-conductive sublayer to define the layer conductive section and the layer non-conductive section. In a further example embodiment, each layer conductive section interfaces with the layer non-conductive section along a linear path. In yet a further example embodiment, each layer conductive section interfaces with a layer non-conductive section along a non-linear path. In one example embodiment, each layer conductive section includes carbon fibers impregnated with a resin and each layer non-conductive section includes glass fibers impregnated with the resin. In another example embodiment, the carbon fibers are Hexcel HM63 fibers, the glass fibers are Hexcel 120 S-Glass fibers and the resin is Hexcel 8552 resin. In yet another example embodiment, the composite tube also includes a non-conductive layer spanning at least a portion of the first axial section. In a further example embodiment, the composite tube has a compressive strength of at least 2,000 lbf. In a further example embodiment, the composite tube has a tensile strength of at least 3,000 lbf. In yet a further example embodiment, the composite tube also includes a fitting connected to each end of the composite tube, wherein part of the fitting is received within each end.

In an example embodiment, a method for forming a composite tube includes laying a plurality of composite material layers over a mandrel forming a composite tube, and each of the plurality of layers includes a non-conductive section and a conductive section. In another example embodiment, the non-conductive section of one of the plurality of layers extends over at least a portion of the non-conductive section and at least a portion of the conductive section of an adjacent layer of the plurality of layers. In yet another example embodiment, the plurality of layers includes a first plurality of two-section layers including a non-conductive section and a conductive section and a second plurality of three-section layers including two conductive sections separated by a non-conductive section. In a further example embodiment, the composite tube formed includes a first end opposite a second end and a length as measured axially between the first end and the second end, and laying the plurality of layers includes laying the plurality of layers such that the non-conductive section of each layer spans a first section of the axial length of the tube, the first section not extending over a mid-length of the tube and extending in a direction toward the first end of the tube. In yet a further example embodiment, the first section extends to no greater than 45% of the tube length as measured from the first end. In one example embodiment, the non-conductive section of each layer of the plurality of layers occupies less than 40% of the length of the tube. In another example embodiment, the non-conductive section of each layer of the plurality of layers occupies less than 30% of the length of the tube. In yet another example embodiment, the method also includes laying a non-conductive layer to overlap a conductive section of an adjacent one of the plurality of layers. In yet another example embodiment, the method also includes laying a plurality of non-conductive layers, such that each of the plurality of non-conductive layers is separated by another of the plurality of non-conductive layers by at least one of the plurality of layers including the non-conductive section and the conductive section. In a further example embodiment, each layer conductive section is a conductive sublayer and each layer non-conductive section is a non-conductive sublayer, and the conductive sublayer is laid adjacent the non-conductive sublayer to define the layer conductive section and non-conductive section. In yet a further example embodiment, each layer conductive section interfaces with the layer non-conductive section along a linear path. In one example embodiment, each layer conductive section interfaces with the layer non-conductive section along a non-linear path. In another example embodiment, each layer conductive section includes carbon fibers impregnated with a resin and each layer non-conductive section includes glass fibers impregnated with the resin. In yet another example embodiment, the carbon fibers are Hexcel HM63 fibers, the glass fibers are Hexcel 120 S-Glass and the resin is Hexcel 8552 resin. In a further example embodiment, the method also includes connecting a fitting to each end the formed composite tube by inserting a portion of each fitting to each end of the formed composite tube.

### BRIEF DESCRIPTION OF THE DRAWINGS

FIG. 1 is a perspective view of a composite tube assembly.
FIG. 2 is a plan view of an example embodiment composite material two-section layer including a non-conductive section and a conductive section.
FIG. 3 is a plan view of an example embodiment composite material three-section layer including a non-conductive section between two conductive sections.
FIGS. 4 and 5 are cross-sectional views taken through the thickness of example embodiment composite tubes used in example embodiment composite tube assemblies.
FIG. 6A is a perspective view of an example embodiment composite tube.
FIG. 6B is a cross-sectional view of the example embodiment composite tube shown in FIG. 6A taken through its thickness showing its layer lay-up sequence.
FIG. 7 is a cross-sectional view of another example embodiment composite tube showing its layer lay-up sequence.
FIG. 8 is a cross-sectional view of yet another example embodiment composite tube showing its layer lay-up sequence.

### DESCRIPTION

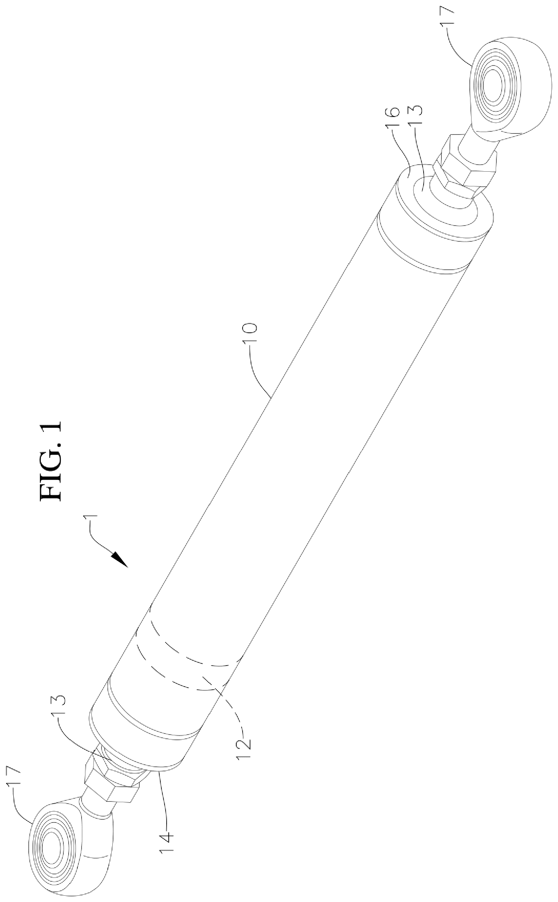

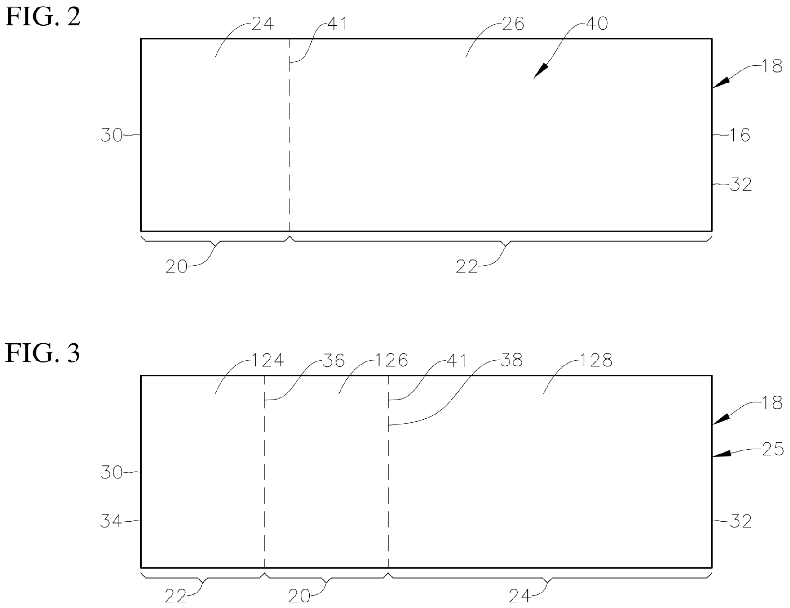

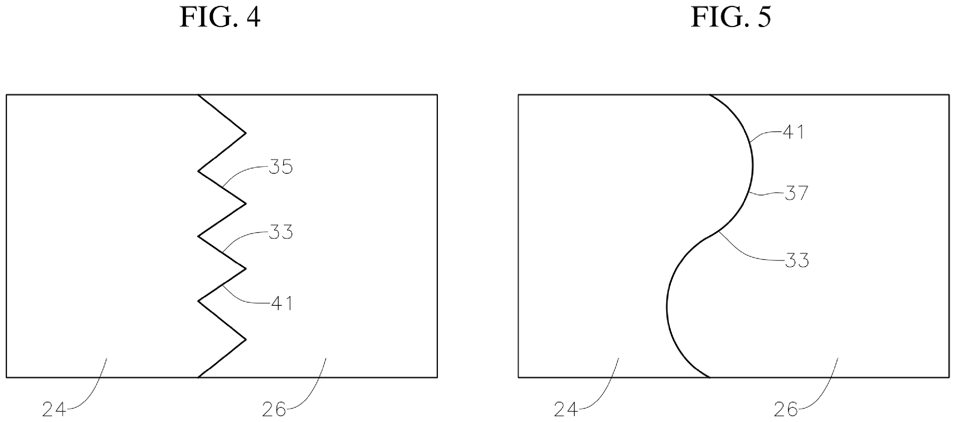

In an example embodiment, a composite tube 10 of a composite tube assembly (also known a composite rod) 1 includes a section 12 of material, between the ends 14, 16 of the composite tube, that is electrically non-conductive, as for example shown in FIG. 1. A fitting 13 is connected to each end of the composite tube. Generally, a fitting 13 is received in each end of the tube and the tube is compressed over the fitting. Typically, the composite tube is heated to its gel temperature prior to the insertion of each fitting. Once each fitting is inserted into its corresponding tube end, its corresponding tube end portion is compressed over the fitting and allowed to cool. Connecting fittings, such as clevis bolts or end rods 17 are connected through each end 14, 16 of the composite tube. An example embodiment composite tube is made of layers 18 of composite material. The layers are impregnated with resin and are laid over a mandrel and then cured at an appropriate temperature and pressure to form the tube. This method of forming composite tubes is well known. Typically, each layer extends from a first end 14 of the tube to a second end 16 of the tube. In example embodiments, multiple adjacent layers (i.e., sublayers) are used to define a layer extending from a first end of the tube to a second end of the tube. "Layer" as used herein in relation to the composite material forming each tube, refers to a layer of composite material typically extending from a first end to a second end of the tube formed by such layers. The tube ends are often ground or cut after formation defining new tube ends. Such "layer" of composite material can be a single layer or a layer defined by multiple adjacent sublayers. In an example embodiment, each layer includes a first section 24 of a material 20 that is electrically non-conductive, such as fiberglass, and a second section 26 of composite material 22 that is conductive, such as carbon fiber, to form at least a two-section layer 40, as for example shown in FIG. 2. The second section extends from the first section. In an example each layer is a three-section layer 25 and includes a first section 124 of electrically conductive material 22, such as carbon fiber, a second section 126 of a material 20 that is electrically non-conductive, such as fiberglass, and a third section 128 of electrically conductive material 24, such as carbon fiber, as for example shown in FIG. 3. The third section extends from the second section which extends from the first section. Each layer extends from a first end 30 to a second end 32 of the layer. Each of the first, second and third sections have a first end opposite a second end. The first section 124 first end 34 defines the first end 30 of the layer and extends toward the second end 32 of the layer. The second section 126 extends from a second end 36 of the first section towards the second end 32 of the layer. The third section 128 extends from a second end 38 of the second section 26 to the second end 32 of the layer. In other words, the first section extends from the first end of the layer towards the second end of the layer, the third section extend from the second end of the layer toward the first end of the layer, and the second section extends between the first section and the third section between the first and second ends of the layer. It should be understood, that after each layer is laid one over another layer over a mandrel to form the tube, the ends of the formed tube may be cut or ground to define a clean end. In this regard a new first end of the first section and a new second end of the third section of each layer is defined. Furthermore, each section described herein may be a separate sublayer that is laid adjacent to the another sublayer, such that the two adjacent sublayers form adjacent layer sections. Thus, layer "section" as used herein should be construed to be a layer section or a sublayer. In an example embodiment, each layer section, especially when defined by a sublayer, may overlap its adjacent section. For example, the conductive section and its adjacent non-conductive section may overlap each other. In an example embodiment, the overlap between the conductive section and the non-conductive section does not exceed ¼ inch. In a further example embodiment, the overlap is between 1/8 and ¼ inch. In an example embodiment, an interface 41 between adjacent sections defining a layer may form a linear pattern 33 when viewed in cross-section thought the thickness of a wall of the composite tube,or a non-linear pattern 33 as for example zig-sag, as shown in FIG. 4, or wave 35 as for example shown in FIG. 5, or curved. In embodiments, the interface is a path defined by the overlap.

In an example embodiment each layer conductive section or conductive sublayer is formed from carbon fibers impregnated with resin and in a further example embodiment from Hexcel HM63 fibers impregnated with Hexcel 8552 resin. In another example embodiment, each layer non-conductive section or non-conductive sublayer is formed from glass fibers impregnated with resin and in yet another example embodiment, from Hexcel 120 S-Glass fibers impregnated with Hexcel 8552 resin.

In example embodiments, the fibers or each section are axially aligned along the length of the layer they define. For clarity, the length of each layer extends from the first end 30 to the second end 32 of the layer along a longitudinal axis which is parallel to a longitudinal axis of the tube when formed.

In an example embodiment, a layer electrically non-conductive section (e.g. the first section in FIG. 2 or the second section in FIG. 3), occupies less than 50% of the length of its corresponding layer 18. In another example embodiment, the second section occupies less than 40% of the length of its corresponding layer. In yet a further example embodiment, the second section occupies less than 30% of the length of its corresponding layer. In one example embodiment, the second section that occupies less than 20% of the length of its corresponding layer. In another example embodiment, the second section occupies less than 10% of the length of its corresponding layer. In a further example embodiment, the second section occupies about 30% of the length of its corresponding layer.

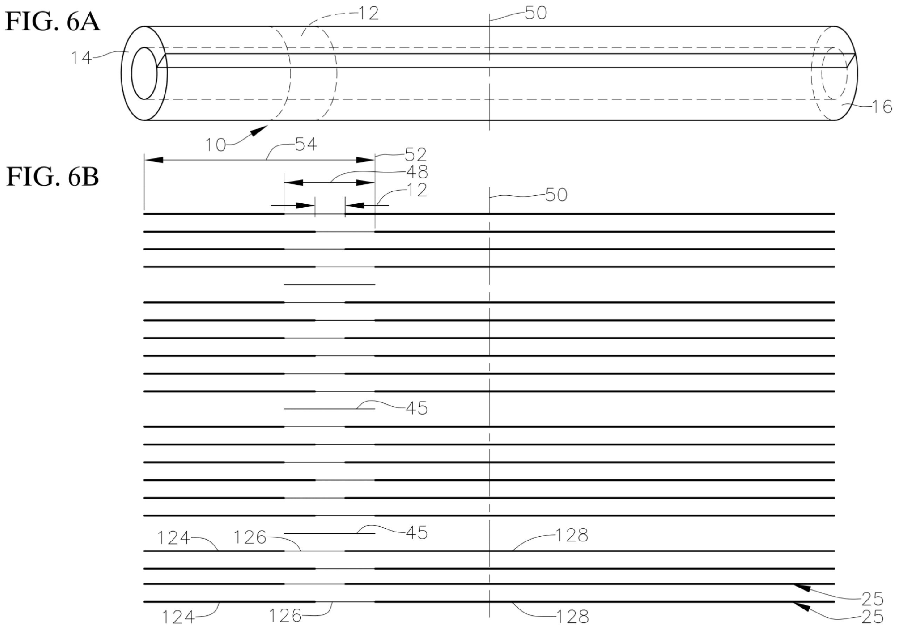

To form the composite tube, each layer with the conductive and non-conductive sections are laid over a mandrel one over the other to form a tube, as for example shown in FIG. 6A and 6B. The layers are then cured under heat and pressure to form the composite tube. This process is well known. However, each layer is laid over a preceding layer with its electrically non-conductive section offset but partially overlapping the second section, i.e., the electrically non-conductive section, of the preceding layer. In other words, the second sections of the sequential layers are staggered, with the second sections of every other layer aligned. In an example embodiment, multiple three-section layers 25 are stacked to form the tube having a section on non-conductive material. More specifically, tthe non-conductive section of each layer partially overlaps a conductive section and a non-conductive section of an adjacent layer, as for example shown in FIG. 6B. With this example embodiment, each second section of every other layer are generally axially aligned, i.e. they are aligned along the longitudinal axis of the formed tube.

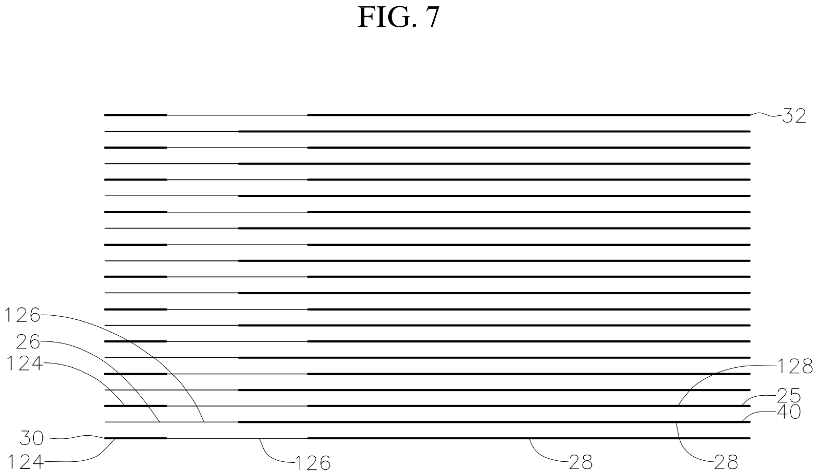

In a further example embodiment, layers 40 having just two sections, i.e., a first conductive section 24 and a second non-conductive section 26, as shown in FIG. 2 are used in lieu of the three section layers. In other example embodiments alternating layers of three sections and two sections are used. In other words, a two-section layer 40 is laid over the three-section layer 25 and a three-section layer is subsequently laid over the two-section layer, as for example shown in FIG. 7. For example, a two-section layer is laid over a three-section layer, such that the non-conductive section 24 of the two-section 40 layer extends to the first end 30 of the tube and the conductive section 26 of the two-section layer extends to the second end of the tube. A three-section layer 25 is laid over the two-section layer 40, such that the first conductive section 124 of the three-section layer extends to the first end 30 of the tube and the third conductive section 128 of the three-section layer extends to the second end 32 of the tube. The second non-conductive section 126 of the three-section layer which is between the first and second sections of the three-section layer overlaps both sections of the two-section layer it surrounds. In other words, the second non-conductive section of the three-section layer straddles both the conductive and non-conductive sections of its adjacent two-section layer.

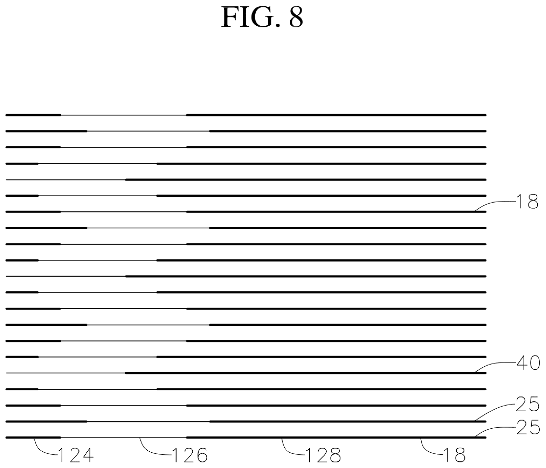

In another example embodiment as shown in FIG. 8, three-section layers 25 and two-section layers 40 are used. In the example embodiment shown in FIG. 8, four or five three-section layers 25 are used followed by a two-section layer 40. In the shown example embodiment, four three-section layers 25 are used followed a two-section layer 40, then multiple stacks of five three-section layers followed by a two-section layer are used, followed by four three-section layers. In the example embodiment shown in FIG. 8, the non-conductive sections of each layer are arranged such that they form a zig-zag pattern through the thickness of the composite tube wall they define extending from the first end and back to the first end of the tube as shown in FIG. 8. In another example embodiment, the path may have other shapes such as a wave, as for example as sinusoidal wave.

In an example embodiment, the electrically non-conductive section of each layer overlaps a minimum of 10% of the length of the preceding layer electrically conductive section. In an example embodiment most if not all layers are laid with their fiber axis aligned along the length of the mandrel.

In example embodiments, the electrically non-conductive sections, even when staggered are arranged such that an axial section 12 of the tube they form extending along a length of the tube consists of only non-conductive material, as shown in FIGS. 6A and 6B. In an example embodiment, this axial section 12 of non-conductive material spans less than 50% of the tube length. In another example embodiment, it spans less than 45% of the tube length. In yet another example embodiment, it spans less than 40% of the tube length. In a further example embodiment, it spans less than 35% of the tube length. In yet a further example embodiment, it spans less than 30% of the tube length. In one example embodiment, it spans less than 25% of the tube length. In another example embodiment, it spans less than 20% of the tube length. In yet another example embodiment, it spans less than 15% of the tube length. In a further example embodiment, it spans less than 10% of the tube length.

In example embodiments, the non-conductive section of each layer is thinner than the conductive section(s) of such layer. To level up the layers such that decrease in the thickness of the tube in the areas of the non-conductive sections, a layer 45 of non-conductive material is laid over or below the non-conductive sections, as for example shown in FIG. 6B. Depending on the thickness of the non-conductive sections relative to the conductive sections, the non-conductive layers are laid before or after one or multiple layers of the two or three section layers are laid. In an example embodiment, each of the non-conductive layers 45 used has a length that spans the length occupied by the staggered non-conducive sections of the layers. As such, the length of the non-conductive layer 45 is longer than the length of the non-conductive sections so as to span the length to which adjacent non-conductive sections extend to.

With any of the aforementioned embodiments, once the tube is formed it will have an axial section 48 that includes a non-conductive material. In example embodiments, this axial section spans less than 50% of the length of the tube. In another example embodiment it spans less than 45% of the length of the tube. In a further example embodiment, it spans less than 40% of the length of the tube. In yet another example embodiment it spans less than 35% of the length of the tube. In yet a further example embodiment it spans less than 30% of the length of the tube. In one example embodiment it spans less than 25% of the length of the tube. In another example embodiment it spans less than 20% of the length of the tube. In another example embodiment it spans less than 15% of the length of the tube. In yet another example embodiment it spans less than 10% of the length of the tube.

Is some example embodiment some layers are laid with their fiber axis along an angle relative to the mandrel as for example an angle of 30, 45, 60, or 90 degrees.

In example embodiments, in order to optimize compressive strength and resist bucking, the electrically non-conductive sections are positioned so that they do not extend to the axial middle 50 of the composite tube, as for example shown in FIGS. 6A and 6B. In example embodiments, the non-conductive sections extend from an end of the tube up to a location 52 as measured longitudinally from such end of the tube. The location 52 extends to a distance 54 as measured axially from such end of the tube along the length of the tube. In an example embodiment such distance 54 extends to less than 50% of the length of the tube length. In another example embodiment such distance 54 extends to less than 45% of the tube length. In yet another example embodiment such distance 54 extends to less than 40% of the tube length. In a further example embodiment, such distance 54 extends to 35% of the tube length. In yet a further example embodiment, such distance 54 extends to less than 30% of the tube length. In one example embodiment, such distance 54 extends to less than 25% of the tube length. In another example embodiment, such distance 54 extends to less than 20% of the tube length.

In other example embodiments, the composite tube may be wound to have a non-conductive section and conductive sections instead of being formed by being laid a layer at a time.

Applicants discovered that overlapping the non-conducting section of a layer as it is applied so that ie extends over another layer's conductive section and non-conductive section increases the axial and compressive strength of the tube formed. Applicants have discovered that any of the aforementioned example embodiment composite tubes have a compressive strength of at least 2,000 lbf, and a tensile strength of at least 3,000 lbf.

While the description herein has been made with particular references to exemplary embodiments thereof, the exemplary embodiments described herein are not intended to be exhaustive or to limit the scope of the invention to the exact forms disclosed. Persons skilled in the art and technology to which this invention pertains will appreciate that alterations and changes in the described structures and methods of assembly and operation can be practiced without meaningfully departing from the principles, spirit, and scope of this invention, as set forth in the following claims. Although relative terms such as "outer," "inner," "upper," "lower," "below," "above," and similar terms have been used herein to describe a spatial relationship of one element to another, it is understood that these terms are intended to encompass different orientations of the various elements and components of the invention in addition to the orientation depicted in the figures. Additionally, as used herein, the term "substantially," "about," and similar terms are used as terms of approximation and not as terms of degree, and are intended to account for the inherent deviations in measured or calculated values that would be recognized by those of ordinary skill in the art. Furthermore, as used herein, when a component is referred to as being "on" another component, it can be directly on the other component or components may also be present therebetween. Moreover, when a component is component is referred to as being "coupled" to another component, it can be directly attached to the other component or intervening components may be present therebetween.

The invention can e.g. be summarized by one or more of the following clauses:
1. A composite tube comprising;
   a first end opposite a second end;
   a first axial section comprising a non-conductive material through its thickness; and
   a second axial section comprising a conductive material, wherein the first axial section spans an axial portion of the tube not extending to the axial middle of the tube.
2. The composite tube of clause 1, wherein the first axial section spans less than 40% of the axial length of the tube.
3. The composite tube of clause 1 or clause 2, wherein the first axial section spans less than 30% of the axial length of the tube.
4. The composite tube of one or more of the preceding clauses, wherein the tube is formed from a plurality of layers laid one over the other, wherein each layer comprises a non-conductive section and a conductive section.
5. The composite tube of clause 4, wherein the non-conductive section of one said plurality of layers extends over a portion of the non-conductive section and a portion of the conductive section of an adjacent layer of said plurality of layers.
6. The composite tube of clause 5, wherein said plurality of layers comprise a plurality of two-section layers each comprising a non-conductive section and a conductive section and a plurality of three-section layers each comprising two conductive sections and a non-conductive section between said two conductive sections, wherein said plurality of layers forming said tube alternate between a layer of said plurality of two-section layers and a layer of said plurality of three-section layers.
7. The composite tube of one or more of the preceding clauses 4-6, further comprising a plurality of non-conductive layers, wherein each of said plurality of non-conductive layers is separated from another of said plurality of non-conductive layers by at least one layer comprising a conductive section.
8. The composite tube of one or more of the preceding clauses 4-7, wherein each layer conductive section is a conductive sublayer and each layer non-conductive section is a non-conductive sublayer, wherein the conductive sublayer is laid adjacent the non-conductive sublayer to define said layer conductive section and non-conductive section.
9. The composite tube of one or more of the preceding clauses 4-8, wherein each layer conductive section interfaces with said layer non-conductive section along a linear path.
10. The composite tube of one or more of the preceding clauses 4-9, wherein each layer conductive section interfaces with a layer non-conductive section along a non-linear path.
11. The composite tube of one or more of the preceding clauses 4-10, wherein each layer conductive section comprises carbon fibers impregnated with a resin and each layer non-conductive section comprises glass fibers impregnated with the resin.
12. The composite tube of clause 11, wherein the carbon fibers are Hexcel HM63 fibers, the glass fibers are Hexcel 120 S-Glass fibers and the resin is Hexcel 8552 resin.
13. The composite tube of one or more of the preceding clauses, further comprising a non-conductive layer spanning at least a portion of the first axial section.
14. The composite tube of one or more of the preceding clauses, wherein the composite tube has a compressive strength of at least 2,000 lbf.
15. The composite tube of one or more of the preceding clauses, wherein the composite tube has a tensile strength of at least 3,000 lbf.
16. The composite tube of one or more of the preceding clauses, further comprising a fitting connected to each end of the composite tube, wherein part of the fitting is received within each end of the composite tube.
17. A method for forming a composite tube comprising:
   laying a plurality of composite material layers over a mandrel forming a composite tube, wherein each of said plurality of layers comprises a non-conductive section and a conductive section.
18. The method of clause 17, wherein the non-conductive section of one of said plurality of layers extends over at least a portion of the non-conductive section and at least a portion of the conductive section of an adjacent layer of said plurality of layers.
19. The method of clause 17 or clause 18, wherein said plurality of layers comprises a first plurality of two-section layers comprising a non-conductive section and a conductive section and a second plurality of three-section layers comprising two conductive sections separated by a non-conductive section.
20. The method of one or more of the preceding clauses 17-19, wherein the composite tube formed comprises a first end opposite a second end and a length as measured axially between the first end and the second end, wherein laying said plurality of layers comprises laying said plurality of layers such that the non-conductive section of each layer spans a first section of the axial length of the tube, said first section not extending over a mid-length of the tube and extending in a direction toward the first end of the tube.
21. The method of clause 20, wherein the first section extends to no greater than 45% of the tube length as measured from the first end.
22. The method of clause 20 or clause 21, wherein the non-conductive section of each layer of said plurality of layers occupies less than 40% of the length of the tube.
23. The method of one or more of the preceding clauses 20-22, wherein the non-conductive section of each layer of said plurality of layers occupies less than 30% of the length of the tube.
24. The method of one or more of the preceding clauses 17-23, further comprising laying a non-conductive layer to overlap a conductive section of an adjacent one of said plurality of layers.
25. The method of clause 24, further comprising laying a plurality of non-conductive layers, such that each of said plurality of non-conductive layers is separated by another of said plurality of non-conductive layers by at least one of said plurality of layers comprising said non-conductive section and said conductive section.
26. The method of one or more of the preceding clauses 17-25, wherein each layer conductive section is a conductive sublayer and each layer non-conductive section is a non-conductive sublayer, wherein the conductive sublayer is laid adjacent the non-conductive sublayer to define said layer conductive section and non-conductive section.
27. The method of one or more of the preceding clauses 17-26, wherein each layer conductive section interfaces with said layer non-conductive section along a linear path.
28. The method of one or more of the preceding clauses 17-27, wherein each layer conductive section interfaces with said layer non-conductive section along a non-linear path.
29. The method of one or more of the preceding clauses 17-28, wherein each layer conductive section comprises carbon fibers impregnated with a resin and each layer non-conductive section comprises glass fibers impregnated with the resin.
30. The method of clause 29, wherein the carbon fibers are Hexcel HM63 fibers, the glass fibers are Hexcel 120 S-Glass fibers and the resin is Hexcel 8552 resin.
31. The method of one or more of the preceding clauses 17-30, further comprising connecting a fitting to each end the formed composite tube by inserting a portion of each fitting to each end of the formed composite tube.

## Claims

1. A composite tube (10) comprising;
a first end (14) opposite a second end (16);
a first axial section comprising a non-conductive material; and
a second axial section comprising a conductive material, wherein the first axial section spans an axial portion of the tube.

2. The composite tube of claim 1, wherein the first axial section spans less than 40% of the axial length of the tube.

3. The composite tube of claim 1 or claim 2, wherein the tube is formed from a plurality of layers (18) laid one over the other, wherein each layer comprises a non-conductive section (24) and a conductive section (26).

4. The composite tube of claim 3, wherein the non-conductive section (24) of one said plurality of layers (18) extends over a portion of the non-conductive section (24) and a portion of the conductive section (26) of an adjacent layer of said plurality of layers (18).

5. The composite tube of claim 4, wherein said plurality of layers (18) comprise a plurality of two-section layers (40) each comprising a non-conductive section (24) and a conductive section (26) and a plurality of three-section layers (25) each comprising two conductive sections (124, 128) and a non-conductive section (126) between said two conductive sections (124, 128), wherein said plurality of layers (18) forming said tube alternate between a layer of said plurality of two-section layers (40) and a layer of said plurality of three-section layers (18).

6. The composite tube of any of the preceding claims 3-5, wherein each layer conductive section comprises carbon fibers impregnated with a resin and each layer non-conductive section comprises glass fibers impregnated with the resin.

7. The composite tube of any of the preceding claims, wherein the composite tube has a compressive strength of at least 2,000 lbf (8896.44 Newtons).

8. The composite tube of any of the preceding claims, further comprising a fitting (13) connected to each end of the composite tube, wherein part of the fitting (13) is received within each end of the composite tube (10).

9. The composite tube of any of the preceding claims, wherein the first axial section does not extend to the axial middle of the tube.

10. The composite tube of any of the preceding claims, further comprising a third axial section comprising a non-conductive material axially spaced apart from the first section.

11. The composite tube of claim 10, wherein the second axial section is located axially between the first and third axial sections.

12. The composite tube of any of the preceding claims, further comprising a fourth axial section comprising a conductive material axially spaced apart from the second section.

13. The composite tube of any of the preceding claims, wherein the third axial section is located axially between the second and fourth axial sections.

14. The composite tube of any of the preceding claims, wherein said first axial section comprises said non-conductive material through its thickness.

15. The composite tube of any of the preceding claims, wherein said first axial section comprises said non-conductive material through its entire thickness.
